# EUROPÄISCHE PATENTSCHRIFT

(11) **EP 1 715 209 B1**
(45) Veröffentlichungstag und Bekanntmachung des Hinweises auf die Patenterteilung: **29.09.2010**
(21) Anmeldenummer: 06004427.8
(22) Anmeldetag: 04.03.2006
(51) Int. Cl.: F16D 23/06

(54) **Rastelement**
Blocking element
Elément de blocage

(30) Priorität: 22.04.2005 DE 102005018900
(43) Veröffentlichungstag der Anmeldung: 25.10.2006
(73) Patentinhaber: Schaeffler Technologies GmbH & Co. KG, 91074 Herzogenaurach (DE)
(72) Erfinder: Spoerl, Marcus, 91126 Rednitzhembach (DE); Martin, Reiner, 96178 Pommersfelden (DE)

(56) Entgegenhaltungen:
- EP-A- 1 408 250
- FR-A- 2 850 152

## Beschreibung

### Gebiet der Erfindung

Die Erfindung betrifft ein Rastelement zum Verrasten eines ersten Getriebeteils an einem zweiten Getriebeteil in wenigstens einer Stellposition, wobei das Rastelement aufweist:
- einen Grundkörper mit einem Boden,
- das Rastelement seitlich begrenzende Wände,
- einen Deckel mit einer vom Boden weg weisenden Auswölbung, wobei der Deckel in Druckrichtung vom Grundkörper versetzt angeordnet und zu diesem in Druckrichtung längsbeweglich ist,
- ein Federelement, das sich am Grundkörper und am Deckel abstützt, von diesen wenigstens teilweise eingekapselt ist, wobei das Federelement den Deckel gegen das erste Getriebeteil vorspannt.

### Hintergrund der Erfindung

Es ist dem Fachmann bekannt, dass derartige Rastelemente in verschiedenen Anwendungen der Schaltgetriebe von Kraftfahrzeugen eingesetzt sind. Sie arretieren z. B. als Arretierungen bewegliche Getriebeelemente in Schalt- oder Wählpositionen, so dass diese Getriebeelemente, beispielsweise trotz Erschütterungen während des Fahrbetriebs, in den vorgegebenen Stellpositionen verbleiben. Derartige Getriebeelemente sind z. B. dreh- und längsverschiebbare Schaltwellen, längsverschiebbare Schaltschienen und schwenkbare Schaltbolzen. Die Arretierungen sind dabei gegen eine Rastkontur vorgespannt, deren Oberfläche in der Regel durch die Kontur eines Rastgebirges mit Erhöhungen und Vertiefungen beschrieben ist. In den vorgegebenen Wähl- bzw. Schaltpositionen verrastet die Arretierung in einer der Vertiefungen des Rastgebirges und hält das Getriebeelement in dieser Position. In der Vergangenheit war die Fachwelt bestrebt, in handgeschalteten Getrieben besonders für die letztgenannten Anwendungen Arretierungen einzusetzen, bei denen in aufwändiger Weise längsbeweglich wälzgelagerte Arretierbolzen mit einer kugelgelagerten Arretierkugel in einem Gehäuse der Arretierung eingesetzt sind. Mit dem Einsatz derartig wälzgelagerter Arretierungen sollte und soll das von der Bedienperson am Handschalthebel beim Wählen und Schalten deutlich spürbare an der Oberfläche der gegen die Arretierung bewegten Getriebeelemente erzeugte Hakeln gemindert werden. Mit dem immer häufigeren Einsatz von hilfskraftbetätigten bzw. automatisierten Schaltgetrieben ist die Verwendung derartiger relativ kostspieliger Arretierungen oftmals nicht mehr notwendig. In ihrer Ausführung einfachere, jedoch robuste und kostengünstig herzustellende Arretierungen sind zunehmend gefragt.

Arretierungen sind weiterhin auch in den bekannten Schaltkupplungen vorgesehen, die für das drehfeste Verbinden von Gangrädern mit einer Getriebewelle beim Schalten von Gängen eingesetzt sind. Die Schaltmuffe dieser Schaltkupplungen ist auf dem Schaltmuffenträger zumeist in einer neutralen Position mittels der Arretierung gehalten. In dieser Stellposition sind gegen die Schaltmuffe drei bis vier am Umfang des Schaltmuffenträgers angeordnete und an dem Schaltmuffenträger gehaltene Arretierungen vorgespannt. Dazu stützen sich die Arretierungen an dem Schaltmuffenträger ab und greifen in Rastvertiefungen an der Schaltmuffe. Weiterhin sind in als Synchronkupplung ausgebildeten Schaltkupplungen auch Rastelemente in Form von Druckstücken eingesetzt. Die Druckstücke sitzen längsverschiebbar in einem Schaltmuffenträger. Die in dieser Anwendung eingesetzten Arretierungen oder Druckstücke bzw. Kombinationen aus Arretierungen und Druckstücken sind relativ einfach gestaltet und unter anderem auch durch blattfederartige bzw. bügelartige flache Federelemente gebildet. Diese lassen eine geringe Bauhöhe zu. Der Schaltmuffenträger ist mit Aufnahmen geringer radialer Tiefe für diese Arretierungen versehen. Die Stabilität des Trägers, insbesondere die Steifigkeit seiner Körperstruktur ist aufgrund der Ausnehmungen geringer Tiefe nur relativ geringfügig nachteilig beeinflusst.

Ein Rastelement in Form eines Druckstücks ist in DE 102 25 269 A1 beschrieben. Ein Grundkörper des Rastelementes aus Blech ist schalenförmig mit einem quer zur Druckrichtung ausgerichteten Boden und Wänden ausgebildet, wobei der Grundkörper durch einen in Druckrichtung gegenüberliegenden Deckel abgedeckt ist. Der Deckel ist zu dem Grundkörper in Druckrichtung längs begrenzt beweglich an dem Grundkörper gehalten, wobei der Rand des Deckels über den Grundkörper gestülpt ist. Ein bügelartiges Federelement ist von dem Grundkörper und dem Deckel eingekapselt und gegen diesen vorgespannt. Der Grundkörper stützt sich an einem Schaltmuffenträger ab, wobei das Federelement gegen eine auf dem Schaltmuffenträger sitzende Schaltmuffe vorgespannt und in einer Rastvertiefung verrastet ist. Bei einer Schaltbewegung nimmt die Schaltmuffe das Druckstück zunächst in Richtung des zu schaltenden Gangrades längs mit, wodurch der bekannte Synchronisationsprozess eingeleitet ist. Größerer axialer Widerstand auf das Rastelement bei weiter in Richtung des Gangrads längsbewegter Schaltmuffe zwingt das Federelement aus der Rastvertiefung an der Schaltmuffe in Richtung des Grundkörpers einzufedern. Das Federelement schnappt wieder in die Rastvertiefung ein, wenn die Schaltmuffe in die neutrale Stellposition zurückgeführt wird. Nachteilig an der an sich zufriedenstellenden Lösung ist, dass das Rastelement, insbesondere wenn diese auch als Druckstück eingesetzt ist, bei schräg eingeleiteten Kräften verkippen kann. Durch ein Verkippen des Deckels kann es zu einer Verklemmung oder einer Verhakung zwischen Schaltmuffenträger und Schaltmuffe kommen. Des Weiteren ist es erforderlich, die Bauhöhe des Rastelements weiter zu verringern, um eine möglichst hohe Stabilität des Schaltmuffenträgers zu erreichen.

### Zusammenfassung der Erfindung

Die gattungsbildende FR 2 850 152 A1 zeigt ein Rastelement mit einem Gehäuse, einem Rastkörper und einem Stützkörper , wobei eine Feder auf den Stützkörper einwirkt und der Stützkörper gegenüber dem Rastkörper gelagert ist. EP 1 408 250 A1 zeigt ein Rastelement, bei dem eine durch einen Deckel gehaltene Rastkugel federbelastet ist. Beide Rastelemente bauen relativ hoch und erfordern somit in dem sie aufnehmenden Getriebeteil einen vergleichsweise großen Bauraum.

Die Aufgabe der Erfindung ist es, ein Rastelement in Form eines Druckstücks oder einer Arretierung zu schaffen, das auch gegenüber schräg eingeleiteten Kräften robust ist, das eine geringe Bauhöhe aufweist und das sich kostengünstig herstellen lässt.

Diese Aufgabe ist nach dem Gegenstand des kennzeichnenden Teils des Anspruchs 1 gelöst. Der Grundkörper des Rastelementes ist schalenförmig mit einem quer zur Druckrichtung ausgerichteten Boden und mit von dem Boden abgewinkelten abgehenden Wänden wannenförmig ausgebildet. Durch den wannenförmigen Grundkörper mit den Vorsprüngen wird der Deckel innerhalb des Grundkörpers geführt. Von außen schräg wirkende Kräfte können den Deckel zwar verkippen, die Verkippung erfolgt jedoch innerhalb des Rastelements, so dass eine Verklemmung zwischen Schaltmuffe und Schaltmuffenträger ausgeschlossen ist.

Der Deckel ist vorzugsweise ein ebenes Blechstück oder Kunststoffstück, das in seiner Mitte eine nach außen weisende, vorzugsweise kalottenförmige Auswölbung besitzt, wobei nach außen gerichtet die entgegen gesetzte Richtung der extern eingeleiteten Kraft bezeichnet. Er ist zu dem Grundkörper in Druckrichtung längs begrenzt beweglich an dem Grundkörper gehalten, wobei die Grenzen durch die die Vorsprünge einerseits und durch eine minimale Höhe eines Federelements, das zwischen Deckel und Boden angeordnet ist, andererseits bestimmt sind. Das Federelement ist von dem Grundkörper und dem Deckel wenigstens teilweise eingekapselt, wobei es sich an dem Grundkörper abstützend gegen den Deckel vorgespannt ist.

In einer vorteilhaften Ausgestaltung der Erfindung sind die Vorsprünge von den Wänden nach innen so abgewinkelt, dass sie zwei zum Boden parallele Stegflächen bilden. Sie gewährleisten dann, dass ein im Wesentlichen ebener Deckel, auf den Kräfte schräg einwirken, sich nicht nur punktuell, sondern an einer Kante abstützen kann, was den Kräftefluss optimiert, da Kraftspitzen reduziert werden und insgesamt dünneres Material verwendet werden kann.

In einer weiteren Ausgestaltung weisen die als Stegflächen ausgebildeten Vorsprünge im der Mitte ihrer Längserstreckung eine Ausnehmung auf oder sind unterbrochen, so dass insgesamt vier Stegflächen vorhanden sind. Die Mitte bezeichnet dabei den im zusammengesetzten Zustand an die Auswölbung des Deckels anschließenden Bereich. Die Auswölbung des Deckels kann in diesem Fall sich über die gesamte Breite des Rastelements erstrecken und den Bauraum optimal nutzen.

Durch den wannenförmigen Grundkörper und den öffnungsseitig des Grundkörpers in diesen eingesetzten Deckel ist das Federelement in der Arretierung eingekapselt. Der Grundkörper und das Federelement sind separat gefertigte Einzelteile mit aneinander angepasster hohlzylindrischer Form oder weisen bevorzugt eine einseitig geöffnete hohle, sowie annähernd quader-, würfel- und trapezförmige bzw. eine andere beliebige geometrische hohle Gestalt auf. Sowohl der Grundkörper als auch der Deckel sind einfache und insbesondere in der Großserien- und Massenproduktion kostengünstig herstellbare Umformteile aus Blech oder Kunststoff. Sie schützen während des Schaltprozesses das Federelement vor Kräften, die sich nachteilig auf die Lebensdauer und Funktion des Federelementes auswirken könnten. Das ist insbesondere dann von Vorteil, wenn die Rastelemente als Druckstücke in den vorgenannten Schaltkupplungen mit Synchronisationen eingesetzt sind. Der Deckel ersetzt den üblicherweise in den bekannten Arretierungen bzw. Druckstücken eingesetzten Rastbolzen und läuft mit der kalottenförmigen Auswölbung an der Rastkontur des Rastgebirges bzw. an der Verzahnung der Schaltmuffe ab bzw. verrastet in den dafür bestimmten Rastvertiefungen der Schaltmuffe.

Die relativ kleinen und bei ihrer Montage unhandlichen Federelemente sind verliersicher in dem Rastelement eingekapselt und damit einfach und sicher zu montieren. In dem durch den Deckel und den Grundkörper gebildeten Käfig sind, bei unveränderter Abmessung der Hülle, Federelemente mit den unterschiedlichsten Federcharakteristiken einsetzbar. Damit ist das Rastelement bei gleicher Außenabmessung an die unterschiedlichsten anwendungsspezifischen Anforderungen anpassbar. Mit einer derartigen Mehrfachverwendung von Grundkörper und Deckel einer Abmessung in verschiedenen Anwendungen eines oder mehrerer Getriebe sind die Kosten für die Herstellung des Rastelementes und der Aufwand für Verpackung, Transport und Logistik so gering wie möglich gehalten.

Die Federelemente sind vorzugsweise einfache Druckfedern, die besonders einfach aufgebaut und damit kostengünstig herzustellen sind. In einer vorteilhaften Weiterbildung der Erfindung besteht das Federelement aus zwei nebeneinander stehenden, spiralförmigen Druckfedern. Diese lassen sich besonders einfach herstellen und deren Federkonstante kann sehr flexibel eingestellt werden. Sie übertragen höhere Kräfte als Blattfedern, können dadurch kleiner dimensioniert werden, was den benötigten Bauraum verringert. Anstatt der zwei Druckfedern kann auch ein einteiliges Doppelfederelement verwendet werden. In diesem Fall sind die beiden Druckfedern fest miteinander verbunden. An Stelle von Spiralfedern lassen sich auch Schraubenfedern verwenden.

Die Federelemente greifen an ihrer einen Seite an dem Deckel an und sind gegen diesen vorgespannt. Die andere Seite stützt sich an dem Grundkörper ab. Die Federelemente sind bezüglich der kalottenförmigen Auswölbung versetzt angeordnet.

In einer weiteren vorteilhaften Variante sind die Lage und Ausrichtung der Federelemente in dem Druckstück durch eine Führung bzw. eine Befestigung dieser in dem Grundkörper abgesichert. Dazu ist das Federelement in dem Grundkörper beispielsweise von zwei sich gegenüberliegenden Seitenwänden des Grundkörpers eingefasst, so dass ein Verkippen und Verdrehen des Federelements aus seiner vorbestimmten Lage nicht möglich ist. Weiter ist vorgesehen, dass das Federelement sich auf einem in Richtung des Deckels aus dem Material des Bodens durchgestellten und dabei dornartig in die Arretierung ragenden hohlen Ansatz sitzt. Das Federelement ist dazu auf dem Ansatz aufgesteckt oder aufgepresst. Gleichzeitig ist das Federelement wiederum zwischen zwei sich gegenüberliegenden Seitenwänden des Grundkörpers seitlich geführt und gestützt.

Die Vorspannung des auf den Deckel wirkenden Federelements ist durch die Bauart beeinflusst. Andererseits ist die Vorspannung auch durch die Bauhöhe des Rastelementes und durch den freien Stützabstand der Feder zwischen dem Grundkörper und den Stützflächen des Deckels regelbar. Insbesondere dann, wenn die Bauhöhe des Rastelementes aus anderen funktionellen Gründen festgelegt ist und dabei der Stützabstand in dem Rastelement für das Federelement zu groß ist, ist der Stützabstand durch eine podestartig aus dem Boden in das Rastelement ragende Ausformung am Boden des Druckstückes einstellbar.

Der Deckel ist in Druckrichtung des Federelementes beweglich an dem Grundkörper befestigt. Es ist von Vorteil, den Deckel und den Grundkörper an den zueinander gewandten Rändern mit quer zur Druckrichtung der Feder abgehenden Formelementen wie Borden oder Noppen zu versehen, die sich in Druckrichtung gesehen hintergreifen und nach dem Erreichen des maximalen Hubes des Deckels in Druckrichtung aneinander liegen, wodurch der Deckel an dem Grundkörper gehalten ist.

Besonders leicht ist das Rastelement, wenn entweder der Deckel oder der Grundkörper oder beide aus Kunststoff hergestellt sind. Gegenüber Metall wird dadurch die Masse reduziert.

Schließlich ist mit Ausgestaltungen der Erfindung vorgesehen, dass die Rastelemente der vorher beschriebenen Bauart und ihrer Ausgestaltungen in einer Schaltkupplung eingesetzt sind, wobei die Rastelemente in den Schaltkupplungen mit Synchronisierung bevorzugt als Druckstücke ausgelegt sind.

### Kurze Beschreibung der Zeichnungen

Die Erfindung ist nachfolgend anhand von Ausführungsbeispielen näher erläutert. Es zeigen:
- Figuren 1 a und 1 b: eine Anwendung eines Ausführungsbeispiels der Erfindung in einer Schaltkupplung mit einer Synchronisiereinheit im Schnitt, wobei Figur 1 a die Schaltmuffe in ihrer neutralen Position und Figur 1b die Schaltmuffe in einer geschalteten Stellung zeigt,
- Figur 2: einen Längsschnitt der Arretierung bzw. des Druckstücks nach Figur 1
- Figur 3: die Arretierung aus Figur 2 entlang der Linie III-III,
- Figur 4: die Arretierung aus Figur 2 entlang der Linie IV-IV,
- Figur 5: die Arretierung aus Figur 2 in Aufsicht,
- Figur 6: eine Arretierung mit einem Doppelfederelement.

### Detaillierte Beschreibung der Zeichnungen

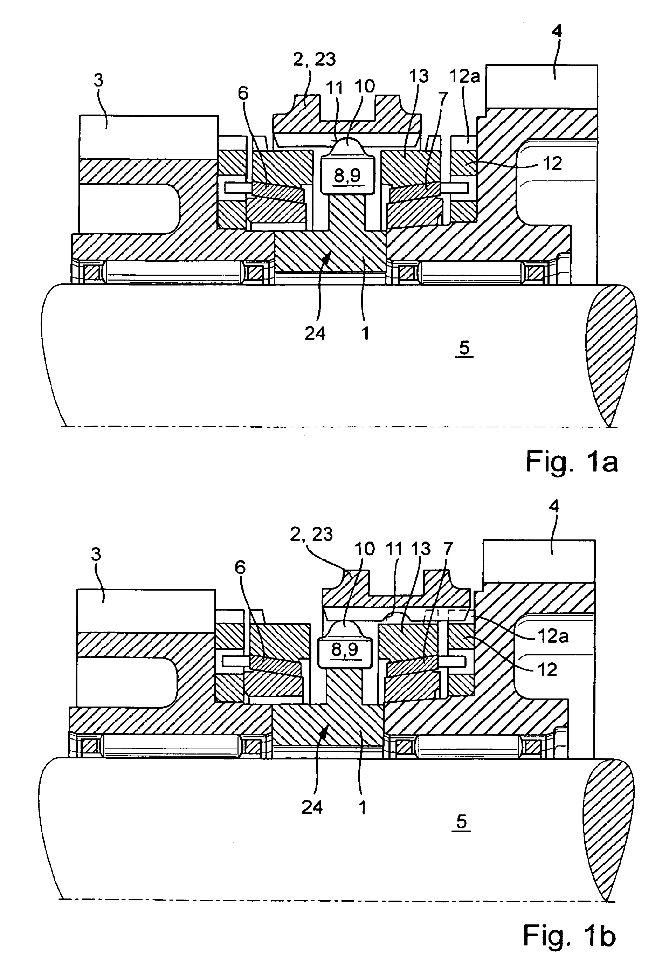

Die Figuren 1 a und 1 b zeigen eine Synchronkupplung 24 aus einem Muffenträger 1 und aus einer Schaltmuffe 2 zum wahlweisen Kuppeln der Gangräder 3 und 4. Die Gangräder 3, 4 sind drehbar aber längs fest auf einer Schaltwelle 5 gelagert. Der Muffenträger 1 sitzt verdrehfest sowie längs fest auf der Schaltwelle 5 und trägt auf seinem Außenumfang das Getriebeteil 23 in Form der Schaltmuffe 2. Die Schaltmuffe 2 ist mittels einer Verzahnung drehfest zu dem Muffenträger 1 und damit zur Schaltwelle 5 aber längs wahlweise in Richtung eines der Gangräder 3 oder 4 verschiebbar auf dem Muffenträger 1 angeordnet. An jeder Seite des Muffenträgers 1 ist längs zwischen dem Muffenträger 1 und dem Gangrad 3, 4 jeweils ein Satz 6, 7 Synchronringe angeordnet.

Der Muffenträger 1 nimmt an seinem Umfang mindestens drei Rastelemente 8 auf. Das Rastelement 8 verrastet an der Schaltmuffe 2 in ihrer neutralen Stellposition nach Figur 1 a. Das Rastelement 8 ist als ein Druckstück 9 ausgelegt. In der neutralen Stellposition stützt sich das Rastelement 8 an dem Muffenträger 1 radial ab und spannt mit einem Deckel 10 gegen die Schaltmuffe 2 vor. Dabei greift das Rastelement 8 mit dem Deckel 10 in eine Rastvertiefung 11 an der Schaltmuffe 2 ein.

Die aus der neutralen Stellposition nach Figur 1 a in die geschaltete Position (Figur 1 b) längs auf dem Muffenträger 1 verschobene Schaltmuffe 2 greift in eine Kupplungsverzahnung 12a einer mit dem Gangrad 4 fest verbundenen Kupplungsscheibe 12 ein. Die Schaltwelle 5 ist über den Muffenträger 1 und die Schaltmuffe 2 mit dem Gangrad 4 drehfest verbunden, wodurch der dem Gangrad 4 zugeordnete Gang geschaltet ist. Bei der Schaltbewegung der Schaltmuffe 2 in die geschaltete Position nimmt die Schaltmuffe 2 zunächst das in die Rastvertiefung 11 eingreifende Rastelement 8 längs mit und verschiebt das Rastelement 8 gegen den äußeren Synchronring 13 des Satzes 7. Der Prozess der Vorsynchronisation ist eingeleitet.

Die weiter in Richtung der Kupplungsverzahnung 12a bewegte Schaltmuffe 2 zwingt den Deckel 10 des sich an dem äußeren Synchronring 13 abstützenden Druckstücks 9 aus der Rastvertiefung 11. Der Deckel 10 federt dabei radial ein. Beim Lösen des Ganges bewegt sich die Schaltmuffe 2 aus der Stellung nach Figur 1b zurück in die neutrale Stellposition nach Figur 1a. Dabei greift die mit Vorspannung an der Schaltmuffe 2 anliegenden Deckel 10 erneut in die Rastvertiefung 11 ein.

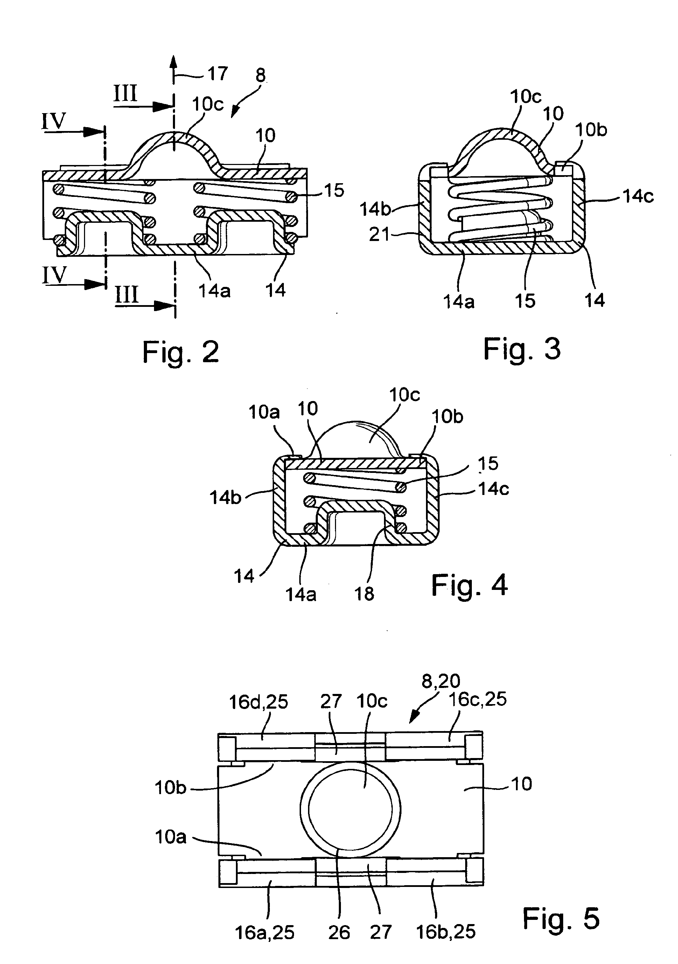

Figuren 2, 3 und 4 zeigen Schnitte durch das Rastelement 8, Figur 5 eine Aufsicht. Das Rastelement 8 besteht aus dem Deckel 10 mit einer Auswölbung 10c, einem Grundkörper 14 und einem Federelement 15. Der Grundkörper 14 ist schalenförmig mit einem quer zur mit dem Pfeil 17 gekennzeichneten Druckrichtung ausgerichteten Boden 14a ausgebildet. Von dem Boden 14a sind Wände in Richtung des Deckels 10 abgewinkelt. Von den Wänden 14b, 14c wiederum sind Vorsprünge 16a, 16b, 16c, 16d abgewinkelt. Diese begrenzen die Bewegung des Deckels 10 in Druckrichtung, da der Deckel 10 Stegflächen 25 aufweist, die sich im montierten Zustand durch das Federelement 15 vorgespannt an den Vorsprüngen 16a, 16b, 16c, 16d abstützen. Die Vorsprünge 16a, 16b, 16c, 16d des Grundkörpers 14 sind hier parallel zum Boden 14a ausgerichtet, weisen eine rechteckige Form auf und sind durch Ausnehmungen 27 voneinander getrennt. Dadurch ist eine besonders leichte Montage des Deckels 10 möglich, da nach manuellem Vorspannen des Federelements 15 der Deckel 10 einfach seitlich in das Rastelement 8 eingeschoben werden kann.

Der Deckel 10 weist eine Mitte 26 auf, wobei die Stegflächen 25 in diesem Bereich unterbrochen sind. Weil hier auch die Ausnehmungen 27 der Vorsprünge 16a, 16b, 16c, 16d angeordnet sind, steht dadurch für die Auswölbung 10c die gesamte Breite des Rastelements zur Verfügung, so dass bei Bedarf der Durchmesser der Auswölbung 10c in der Deckelebene der Breite des Deckels 10 entsprechen kann. Dadurch baut das Rastelement 8 besonders schmal.

In einer weiteren Ausführungsform besteht das Federelement 15 aus zwei Spiralfedern, die auf aus dem Boden 14a in Richtung des Deckels 10 in das Rastelement 8 durchgestellten hohlen Ansätzen 18 sitzen. Die Ansätze 18 sind einteilig mit dem Grundkörper 14 ausgebildet. Das Federelement 15 ist gegen den Deckel 10 vorgespannt. Es kann mit den Ansätzen 18 form- oder stoffschlüssig verbunden werden.

Stützflächen 10a schließen sich seitlich an eine kalottenförmig ausgebildete sowie nach außen hervorstehende Auswölbung 10c an den Deckel 10 an. Mit der Auswölbung 10c greift das Rastelement 8 in die Rastvertiefung 11 der Schaltmuffe 2 (Figur 1 a) ein.

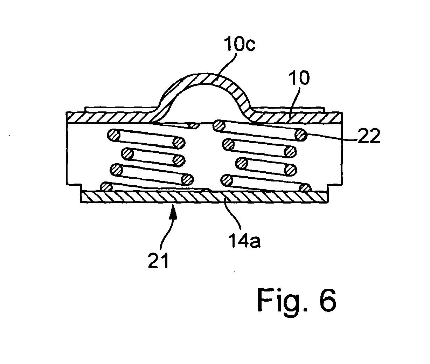

Figur 6 zeigt ein weiteres Ausführungsbeispiel eines erfindungsgemäßen Rastelements 8 in Form eines Druckstücks 20. Das Druckstück 20 besteht aus einem Grundkörper 21, dem Deckel 10 und dem Federelement 15, das als Doppelfeder 22 ausgeführt ist. Die Befestigung der Doppelfeder 22 an den Grundkörper kann entweder durch einen Ansatz erfolgen, oder sie wird stoffschlüssig mit dem Grundkörper verbunden. Eine dritte Möglichkeit ist, diese der Größe nach dem Grundkörper 21 anzupassen, so dass sie innerhalb des Rastelements nicht tangential verschoben werden kann.

### Bezugszeichen

- 1: Muffenträger
- 2: Schaltmuffe
- 3: Gangrad
- 4: Gangrad
- 5: Schaltwelle
- 6: Satz
- 7: Satz
- 8: Arretierung
- 9: Druckstück
- 10: Deckel
- 10a: Stützfläche.
- 10b: Stützfläche
- 10c: Auswölbung
- 11: Rastvertiefung
- 12: Kupplungsscheibe
- 12a: Kupplungsverzahnung
- 13: äußerer Synchronring
- 14: Grundkörper
- 14a: Boden
- 14b: Wand
- 14c: Wand
- 15: Federelement
- 16a: Vorsprung
- 16b: Vorsprung
- 16c: Vorsprung
- 16d: Vorsprung
- 17: Pfeil
- 18: Ansatz
- 19: Vertiefung
- 20: Druckstück
- 21: Grundkörper
- 22: Doppelfeder
- 23: erstes Getriebeteil
- 24: zweites Getriebeteil
- 25: Stegfläche
- 26: Mitte
- 27: Ausnehmung

## Patentansprüche

1. Rastelement (8, 20) zum Verrasten eines ersten Getriebeteils (23) an einem zweiten Getriebeteil (24) in wenigstens einer Stellposition, wobei das Rastelement (8, 20) aufweist:
- einen Grundkörper (21) mit einem Boden (14a) und das Rastelement (8, 20) seitlich begrenzenden Wänden (14b, 14c), wobei der Boden (14a) und die Wände (14b, 14c) einteilig ausgebildet sind und die Wände (14b, 14c) an ihren vom Boden (14a) abgewandten Enden nach innen weisende Vorsprünge (16a, 16b, 16c, 16d) aufweisen,
- einen Deckel (10) mit einer vom Boden (14a) weg weisenden Auswölbung (10c), wobei der Deckel (10) zwischen den Vorsprüngen (16a, 16b, 16c, 16d) und dem Boden (14a) angeordnet ist und zum Grundkörper (21) in Druckrichtung längsbeweglich ist,
- ein Federelement (15), das von dem Grundkörper (21) und dem Deckel (10) wenigstens teilweise eingekapselt ist und durch das Federelement (15) der Deckel (10) gegen das erste Getriebeteil (23) vorspannbar ist
**dadurch gekennzeichnet, dass** das Federelement (15) mit einer Seite unmittelbar am Grundkörper (21) und mit der anderen Seite unmittelbar am Deckel (10) angreift.

2. Rastelement nach Anspruch 1, **dadurch gekennzeichnet, dass** die Vorsprünge (16a, 16b, 16c, 16d) parallel zum Boden (14a) als Stegflächen (25) ausgebildet sind.

3. Rastelement nach Anspruch 1, **dadurch gekennzeichnet, dass** die Vorsprünge 16a 16b, 16c 16d) eine Rechteckform besitzen und jeweils in der Mitte (26) ihrer Längserstreckung eine Ausnehmung (27) aufweisen.

4. Rastelement nach Anspruch 1, **dadurch gekennzeichnet, dass** das Federelement (15) aus zwei einzelnen Spiralfedern oder aus einer Doppelspiralfeder (22) besteht.

5. Rastelement nach Anspruch 4, **dadurch gekennzeichnet, dass** der Boden (14a) zwei in Richtung des Deckels (10) durchgestellte sowie in das Rastelement (8, 20) ragende hohle Ansätze (18) aufweist, wobei der Durchmesser der Spiralfeder dem Durchmesser des Ansatzes (18) entspricht.

6. Rastelement nach Anspruch 5, **dadurch gekennzeichnet, dass** das Federelement (15) am Ansatz geführt ist.

7. Rastelement nach Anspruch 4, **dadurch gekennzeichnet, dass** der Boden (14a) teilweise podestartig in Richtung des Deckels (10) in das Rastelement (8, 20) ragend durchgestellt ist.

8. Rastelement nach Anspruch 1, **dadurch gekennzeichnet, dass** der Grundkörper (21) und/oder der Deckel (10) aus Blech ausgebildet sind.

9. Rastelement nach Anspruch 1, **dadurch gekennzeichnet, dass** der Deckel (10) und/oder der Grundkörper (21) aus Kunststoff bestehen.

10. Rastelement nach Anspruch 1, **dadurch gekennzeichnet, dass** das Rastelement (8, 20) als ein Druckstück (9, 20), das zweite Getriebeteil (24) als eine Synchronkupplung und das erste Getriebeteil (23) als eine Schaltmuffe (2) der Synchronkupplung (24) ausgebildet sind, wobei das an der Schaltmuffe (2) in der Stellposition verrastbare Druckstück (9, 20) zumindest zeitweise mit der Schaltmuffe (2) quer zur Druckrichtung wenigstens begrenzt durch die Schaltmuffe (2) mitbewegbar ist.

## Claims

1. Latching element (8, 20) for latching a first transmission part (23) to a second transmission part (24) in at least one adjustment position, the latching element (8, 20) having:
- a main body (21) comprising a base (14a) and walls (14b, 14c) which laterally delimit the latching element (8, 20), the base (14a) and the walls (14b, 14c) being configured in one piece and the walls (14b, 14c), at their ends facing away from the base (14a), having inward-pointing projections (16a, 16b, 16c, 16d),
- a cap (10) comprising a bulge (10c) pointing away from the base (14a), the cap (10) being disposed between the projections (16a, 16b, 16c, 16d) and the base (14a) and being longitudinally movable relative to the main body (21) in the pressure direction,
- a spring element (15), which is at least partially encapsulated by the main body (21) and the cap (10) and the cap (10) can be pretensioned against the first transmission part (23) by the spring element (15),
**characterized in that** the spring element (15) acts with one side directly upon the main body (21) and with the other side directly upon the cap (10).

2. Latching element according to Claim 1, **characterized in that** the projections (16a, 16b, 16c, 16d) are configured parallel to the base (14a) as web surfaces (25).

3. Latching element according to Claim 1, **characterized in that** the projections (16a, 16b, 16c, 16d) possess a rectangular shape and have respectively, in the middle (26) of their longitudinal extent, a recess (27).

4. Latching element according to Claim 1, **characterized in that** the spring element (15) consists of two individual spiral springs or of one double-spiral spring (22).

5. Latching element according to Claim 4, **characterized in that** the base (14a) has two hollow protrusions (18), which are drawn through in the direction of the cap (10) and jut into the detent element (8, 20), the diameter of the spiral spring corresponding to the diameter of the protrusion (18).

6. Latching element according to Claim 5, **characterized in that** the spring element (15) is guided on the protrusion.

7. Latching element according to Claim 4, **characterized in that** the base (14a) is partially drawn through, jutting in a pod-like manner in the direction of the cap (10) into the latching element (8, 20).

8. Latching element according to Claim 1, **characterized in that** the main body (21) and/or the cap (10) are formed from sheet metal.

9. Latching element according to Claim 1, **characterized in that** the cap (10) and/or the main body (21) consist of plastic.

10. Latching element according to Claim 1, **characterized in that** the latching element (8, 20) is configured as a pressure piece (9, 20), the second transmission part (24) as a synchronizer clutch and the first transmission part (23) as a gearshift sleeve (2) of the synchronizer clutch (24), the pressure piece (9, 20) which is latchable to the gearshift sleeve (2) in the adjustment position being able to be moved by the gearshift sleeve (2) at least intermittently along with the gearshift sleeve (2) transversely to the pressure direction, at least to some limited extent.

## Revendications

1. Elément d'encliquetage (8, 20) pour l'encliquetage d'une première partie de transmission (23) sur une deuxième partie de transmission (24) dans au moins une position de réglage, l'élément d'encliquetage (8, 20) présentant :
- un corps de base (21) avec un fond (14a) et des parois (14b, 14c) limitant latéralement l'élément d'encliquetage (8, 20), le fond (14a) et les parois (14b, 14c) étant réalisés d'une seule pièce et les parois (14b, 14c) présentant à leurs extrémités opposées au fond (14a) des saillies (16a, 16b, 16c, 16d),
- un couvercle (10) avec un bombement (10c) détourné du fond (14a), le couvercle (10) étant disposé entre les saillies (16a, 16b, 16c, 16d) et le fond (14a) et étant déplaçable longitudinalement dans la direction de pression par rapport au corps de base (21),
- un élément de ressort (15) qui est au moins en partie encapsulé par le corps de base (21) et le couvercle (10) et le couvercle (10) pouvant être précontraint par l'élément de ressort (15) contre la première partie de transmission (23),
**caractérisé en ce que** l'élément de ressort (15) vient en prise par un côté directement avec le corps de base (21) et par l'autre côté directement avec le couvercle (10).

2. Elément d'encliquetage selon la revendication 1, **caractérisé en ce que** les saillies (16a, 16b, 16c, 16d) sont réalisées parallèlement au fond (14a) sous forme de surfaces de languettes (25).

3. Elément d'encliquetage selon la revendication 1, **caractérisé en ce que** les saillies (16a, 16b, 16c, 16d) possèdent une forme rectangulaire et présentent à chaque fois au milieu (26) de leur étendue longitudinale, un évidement (27).

4. Elément d'encliquetage selon la revendication 1, **caractérisé en ce que** l'élément de ressort (15) se compose de deux ressorts hélicoïdaux individuels ou d'un double ressort hélicoïdal (22).

5. Elément d'encliquetage selon la revendication 4, **caractérisé en ce que** le fond (14a) présente deux parties creuses (18) passant dans la direction du couvercle (10) et saillant dans l'élément d'encliquetage (8, 20), le diamètre du ressort hélicoïdal correspondant au diamètre de la partie (18).

6. Elément d'encliquetage selon la revendication 5, **caractérisé en ce que** l'élément de ressort (15) est réalisé sur la partie.

7. Elément d'encliquetage selon la revendication 4, **caractérisé en ce que** le fond (14a) passe en partie sous forme de palier dans la direction du couvercle (10) en saillant dans l'élément d'encliquetage (8, 20).

8. Elément d'encliquetage selon la revendication 1, **caractérisé en ce que** le corps de base (21) et/ou le couvercle (10) sont fabriqués en tôle.

9. Elément d'encliquetage selon la revendication 1, **caractérisé en ce que** le couvercle (10) et/ou le corps de base (21) sont fabriqués en plastique.

10. Elément d'encliquetage selon la revendication 1, **caractérisé en ce que** l'élément d'encliquetage (8, 20) est réalisé sous forme de pièce de pression (9, 20), la deuxième partie de transmission (24) est réalisée sous forme d'embrayage synchrone et la première partie de transmission (23) est réalisée sous forme de manchon de sélection (2) de l'embrayage synchrone (24), la pièce de pression (9, 20) pouvant s'encliqueter sur le manchon de sélection (2) dans la position de réglage pouvant être entraînée au moins temporairement avec le manchon de sélection (2) transversalement à la direction de pression au moins de manière limitée par le manchon de sélection (2).
